# EUROPEAN PATENT SPECIFICATION

(11) **EP 4 436 756 B1**
(45) Date of publication and mention of the grant of the patent: **09.07.2025**
(21) Application number: 22813339.3
(22) Date of filing: 28.10.2022
(51) Int. Cl.: B25J 15/04

(54) **GRIPPER QUICK-CHANGE JAW SYSTEM**
GREIFERSCHNELLWECHSELBACKENSYSTEM
SYSTÈME DE MÂCHOIRES À CHANGEMENT RAPIDE DE PRÉHENSEUR

(30) Priority: 22.11.2021 LT 2021571
(43) Date of publication of application: 02.10.2024
(73) Proprietor: UAB "Terekas", 97134 Kretinga (LT)
(72) Inventor: TARASOVAS, Andrius, Palanga (LT)
(74) Representative: AAA Law
(86) International application number: PCT/IB2022/060362
(87) International publication number: WO 2023/089425

(56) References cited:
- EP-A1- 2 986 424
- EP-B1- 2 986 424
- DE-A1- 3 420 857
- GB-A- 2 191 466
- JP-U- S60 194 492

## Description

### Technical Field

The invention relates to transport grippers used in plastic product production lines, and, more specifically, to a system of quick-change jaws of transport grippers for gripping bottle preforms and blown bottles, and the manner in which such jaws interact with the gripper finger.

### Background art

Jaws, in the manufacture of PET products, are parts that are attached to pneumatic, electric grippers, which are used to grip a PET or PP or other plastic preform or product being moved, overturned, carried out, or otherwise manipulated.

Typically, equipment for PET production lines comprises equipment with a series of grippers for transporting preforms and subsequent products. Typically, for mounting jaws, grippers are provided with threaded holes, in some cases at least one additional pin hole, that decrease in size as the gauge of the gripper decreases. In order for the same fixture to be able to manipulate different preforms, readjustment must be done by changing the jaws of the grippers each time the geometry of the workpiece is changed. Thus, switching from one preform standard to another increases the production line preparation time. For example, in a four-cavity manufacturing device, when changing from one preform standard to another, it is necessary to change 16 sets of jaws - each gripper has two jaws, and each jaw has 2 screws. So the fitter has to unscrew and tighten 64 screws. In order to keep the overall size of the entire installation and individual units smaller, access to the grippers is not convenient in almost all cases, it is not possible to use an electric screwdriver, so the fitter must unscrew/tighten the screws manually, using a key. Even working very quickly (unscrewing the screws, removing the first jaw, putting it aside, picking up a new one and screwing it on in 1 min), changing all the jaws would take >30 min. It may take longer because you are working with small parts, in a confined space, where there is no convenient access, where you need to find the position by hand, where the angle of rotation of the key is limited, the parts are small, etc.

The main solutions on the market to solve the quick-change problem of jaws comprise systems for connecting jaws to gripper fingers, where locking of the jaw to the gripper finger is ensured by a combination of fitting recesses and protrusions in both the jaw and the gripper finger, together with a spring-operated locking pin.

International patent application PCT/FR2012/052683 describes a system for quick-change jaws of a gripper for transporting plastic preforms. The system comprises a first part and a second part, where one of these parts is attached to the tool and the other is attached to the support. The first part consists of a rigid body containing a receiving area. The second part has a rigid attachment part oriented in the receiving area along the first coupling direction. The first part comprises a lock which is rigidly and movably anchored to at least one support surface of the body along the second locking direction. The lock has a locking part which, in the connected state of the system, is attached to the mounting part along at least one mutually supporting surface. Each surface, of at least one mutually supporting surface, is inclined with respect to the first and second coupling directions. The main disadvantage of this solution is unstable connection of the jaw to the gripper finger using a locking assembly, which can lead to increased play in the connection and thus reduce the accuracy and safety of the jaw control.

Document No. JP S60 194492 U discloses a conventional robot hand comprising a holding section having an insertion opening for inserting a robot hand claw supported by a hand arm and having a through hole, a pair of notches formed in opposing portions of the peripheral wall of the insertion opening and a conical opening formed continuously with the end portion of one of the notches, a pin that can freely pass through the through hole and be inserted across the notches, a compression spring located on one side of the robot hand claw of the pin and biasing the pin, and a truncated conical head located on the opposite side of the compression spring from the robot hand claw, provided on the pin, and fitted into the opening.

Document No. EP 2 986 424 A1 discloses a gripping device comprising a base body and having at least one jaw that can travel in the base body in one direction of travel. Said base body has an upper side beyond which the mounting section of the jaw projects.

Document No. GB 2 191 466 A and document No.: DE 34 20 857 A1 disclose a spring actuated locking pin on a finger.

The invention does not have the disadvantages listed above and comprises additional benefits such as ease of use, low weight and full recyclability.

### Brief description of the invention

The invention discloses a system of quick-change jaws for a transport gripper and the manner in which such jaws interact with the gripper finger. The quick-change jaw has a plurality of walls at the gripper attachment point that surround the gripper finger to which the jaw is attached. The only way to put a jaw on is to fit it on. This limits any movement of the jaw in directions other than those of the fitting, ensuring a rigid fixation.

A pin for locking the position of the jaw and the gripper finger is inserted through the hole of the gripper finger. On the locking pin manipulation side, a spring is located between the gripper finger and the locking pin head to create the tension force. At the other end of the locking pin, there is a locking head that prevents the spring from pulling the locking pin out of the gripper finger, and at the same time is designed to lock the jaw by interacting with the edge of the second cavity of the jaw cavity partition, the shape of which corresponds to the flank of the perimeter edge of the locking head.

The jaw is fitted onto the gripper when the locking pin is depressed in the opposite direction of the spring action from the gripper finger. During insertion, the locking head of the locking pin moves along the lower surface of the jaw cavity partition to the seating edge of the locking head formed in the jaw cavity partition. After the jaw has reached the end position of mating with the gripper finger, after the rear inner wall of the jaw rests against the free end of the gripper finger, the locking pin is allowed to move in the direction of the spring action, bringing the locking head closer to the settling edge of the locking head of the jaw cavity partition. The jaw is removed from the gripper by depressing the locking pin to the rear unlock position of the locking head, where the locking pin remains in the depressed position until the pin is disengaged from the gripper finger.

### Brief description of the drawings

The features of the invention, which is new and non-obvious, are given in the Claims. However, the invention may be best understood from the following detailed description of the invention, in which, without limiting the scope of the invention, exemplary embodiments of the invention are given in conjunction with the accompanying drawings, where:

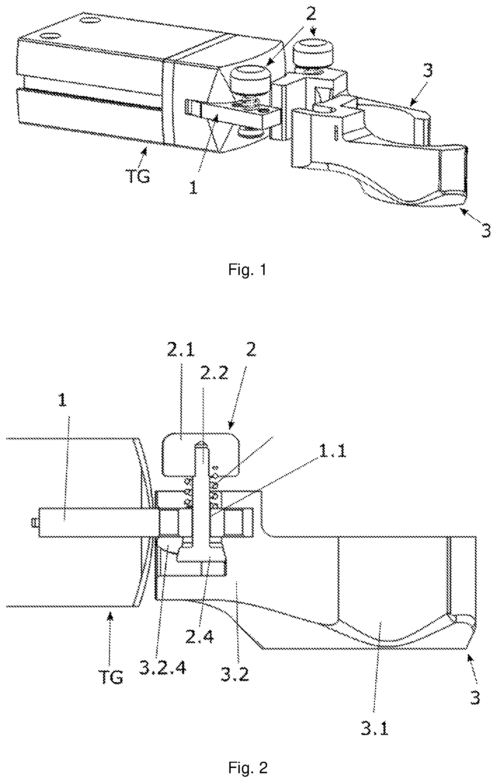

Fig. 1 shows a general view of a quick-change jaw system with one jaw mounted on a gripper finger and other jaw being taken off the gripper finger.
Fig. 2 shows a cross-sectional view of the quick-change jaw system with the locking head of a locking pin set in a locking position between the gripper finger and the mounted jaw.

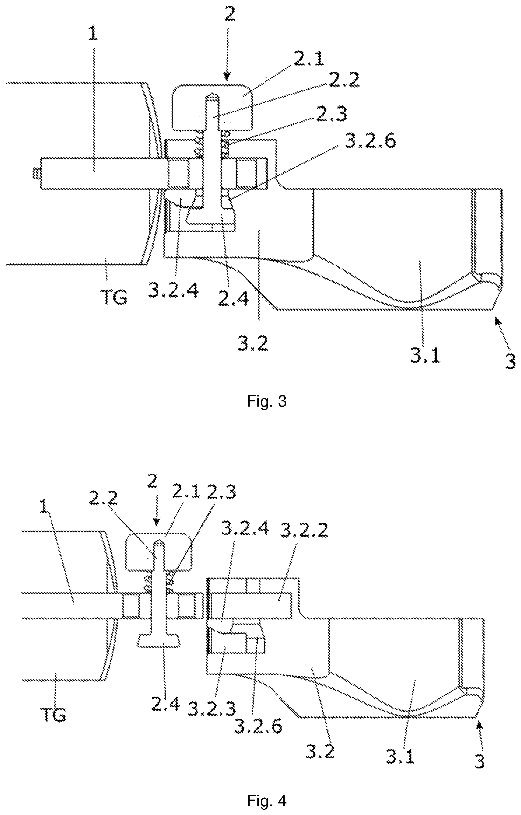

Fig. 3 shows a cross-sectional view of a quick-change jaw system where the locking head of the locking pin is positioned in an intermediate position between the pre-inserted position and inserted position, where the inserted position coincides with the gripper finger and the jaw are interlocked.
Fig. 4 shows a cross-section of the quick-change jaw system where the jaw is pulled off from the gripper finger.

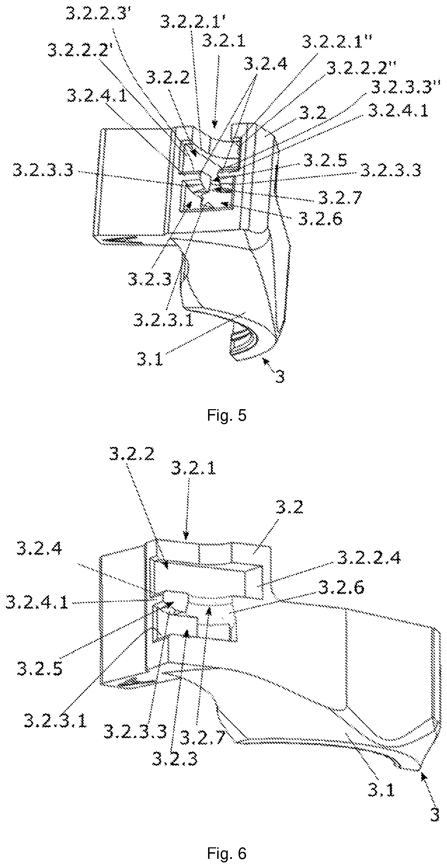

Fig. 5 shows a quick-change jaw.
Fig. 6 shows a cross-sectional view of a quick-change jaw.

The most preferred embodiments of the invention are described below with reference to the drawings. Each figure shows the same numbering of the same or equivalent item.

### Detailed description of embodiments of the invention

It should be understood that numerous specific details are presented in order to provide a complete and comprehensive description of the invention embodiment. However, the person skilled in art will understand that the level of details of embodiment examples does not limit the application of the invention which can be implemented without these specific instructions. Well-known methods, procedures and components have not been described in detail for the embodiment to avoid misleading. Furthermore, this description should not be considered to be constraining the invention to given embodiment examples but only as one of possible implementations of the invention.

Although exemplary embodiments of the invention, or aspects thereof, as illustrated and described, include many components that are depicted in a particular common space or location, some components may also be remote. It should also be understood that the examples given are not limited to the components described but also include other members required for their functioning and interaction with other components, the existence of which is self-explanatory and therefore not detailed.

The gripper (TG) quick-change jaw system comprises the gripper finger (1), a locking pin (2) and a jaw (3).

One end of the gripper finger (1) is designed to be anchored to the gripper (TG), while the other end is free and designed to interact with the jaw (3). The gripper finger (1) comprises at least one hole (1.1), which is intended for a locking pin (2) and in which the locking pin (2) can move along said hole (1.1).

The locking pin (2) comprises an elongated part (2.2) of such a shape, preferably cylindrical, that it can move smoothly longitudinally and rotationally, in the hole (1.1) of the gripper finger (1). It also includes a head (2.1) for transmitting the pressing force to the locking pin (2), which may comprise means to facilitate pressing, such as: friction between said head (2.1) and the pressing means interacting with it, increasing the surface (for gripping and/or pressing by means of human fingers or tools with gripping fingers). It also comprises a spring element (2.3), which is preferably arranged around the elongated part (2.2) of the locking pin (2), between the head (2.1) of the pressing force transmission to the locking pin (2) and the gripper finger (1) so that one end of the spring element would rest on the head (2.1) of the locking pin (2) for pressing force transmission, and the other end would rest on the surface of the gripper finger (1) or near it. The spring element (2.3) is of such dimensions that when the head (2.1) of the locking pin (2) for pressing force transmission is under the action of the force, which causes the pin (2) to move longitudinally in the hole (1.1) of the gripper finger (1), while said head (2.1) approaches the gripper finger (1), the spring element (2.3) would rest with one end on the gripper finger (1), and with the other end - on the head (2.1) of the locking pin (2) for pressing force transmission. The locking pin also comprises one locking head (2.4), which is formed at the end of the elongated part (2.2) of the locking pin (2) opposite to the head (2.1) of the locking pin (2) for pressing force transmission.

Said locking head (2.4) is formed as part of the elongated part (2.2), integral with it, and comprises the shape of a truncated cone, from the central region of the narrow end of which the elongated part of the pin (2.2) extends, perpendicular to the plane of the narrow end. The flank of the perimeter edge of the locking head (2.4) is adapted to interact with the supporting edge (3.2.6) of the second cavity formed in the partition of the cavity (3.2.1) of the jaw (3). Said locking head (2.4) is of such dimensions as to limit the longitudinal movement of the locking pin (2) in the hole (1.1) of the gripper finger (1). The spring element (2.3) and the locking head (2.4) acting together, from different sides of the gripper finger (1), limit the longitudinal movement of the locking pin (2) in the hole (1.1) of the gripper finger (1). Thus, the locking pin (2) is fixed in the finger (1) of the gripper (TG) and cannot fall out of it freely: by pressing the head (2.1) of the locking pin (2) towards the finger (1), the spring element (2.3) is elastically deformed, bringing said head (2.1) closer to said finger (1) and at the same time moving the locking head (2.4) away from the finger.

The jaw (3) comprises a part (3.1) for gripping a preform or an article and a part (3.2) for attaching to the gripper finger, both forming the jaw (3) in a continuous fashion. The part of the jaw (3.2) intended to attach the jaw (3) to the gripper finger (1) comprises a cavity (3.2.1), which comprises: a recess (3.2.3) for the placement of the locking head (2.4), the width of which essentially corresponds to the locking head (2.4) diameter; a recess (3.2.2) for placing the gripper finger (1) in the jaw (3); the partition (3.2.4) of the cavity (3.2.1) formed between the recess (3.2.3) for placing the locking head (2.4) and the recess (3.2.2) for placing the gripper finger (1) in the jaw (3); first cavity (3.2.5) for movement of elongated part (2.2) of the locking pin (2), located between the locking head (2.4) and the lower surface (1.6) of the gripper finger (1), in the partition (3.2.4), where said partition (3.2 .4) comprises front part (3.2.4.1) and guide part (3.2.3.3) of the locking head (2.4); guide and locking support edge (3.2.6) of the locking head (2.4) which is formed in said partition (3.2.4) around the second cavity (3.2.7) for accommodating the elongated part (2.2) of the locking pin (2), located between the locking head (2.4) and the lower surface (1.6) of the gripper finger (1), with the gripper finger (1) fully inserted into the jaw (3). The second cavity (3.2.7) is connected to the first cavity (3.2.5), behind the first cavity (3.2.5), looking in the direction of the insertion of the gripper finger (1) into the jaw (3).

The bottom (3.2.3.1) of the recess (3.2.3), designed to place and guide the end of the locking pin (2) with the locking head (2.4), from the very beginning of the recess (3.2.3), from which the end of the locking pin (2) is inserted with the locking head (2.4), extends in one plane and limits the downward movement of the pin (2) in the direction to the bottom (3.2.3.1) of the recess (3.2.3). The sides of the recess (3.2.3) of the movement of the locking head (2.4) in the jaw (3) limit the lateral movement of the locking head (2.4) of the locking pin (2). Thus, a high accuracy of positioning and connecting the jaw (3) with the gripper finger (1) is achieved due to the three guide surfaces.

The inclination of the guide and locking support edge (3.2.6) of the locking head (2.4) formed in the partition (3.2.4) basically corresponds to the inclination of the edges of the peripheral edge of the locking head (2.4).

The recess (3.2.2) in the jaw (3) for the movement of the gripper finger (1) comprises lateral guide inner surfaces (3.2.2.2', 3.2.2.2"), upper guide inner surfaces (3.2.2.1', 3.2.2.1" ), lower guide internal surfaces (3.2.2.3', 3.2.2.3"), which are also upper surfaces of the partition (3.2.4), and a rear wall (3.2.2.4). Said lateral guide internal surfaces (3.2.2.2', 3.2.2.2") are intended to interact with the lateral surfaces (1.2, 1.3) of the gripper finger (1), the upper guide internal surfaces (3.2.2.1', 3.2.2.1") are designed to interact with the upper surface (1.5) of the gripper finger (1), the lower guide inner surfaces (3.2.2.3', 3.2.2.3") are designed to interact with the lower surface (1.6) of the gripper finger (1) for forward or backward movement of the gripper finger (1 ) in the cavity (3.2.1) of the part (3.2) designed to attach the gripper finger (1). The back wall (3.2.2.4) interacts with the free end (1.4) of the gripper finger (1), which is not attached to the gripper (TG) - the back wall (3.2.2.4) acts as a support for the free end (1.4) of the gripper finger.

Locking and disconnection of the jaw (3) happens as described below. The locking pin (2) is either fully depressed or partially depressed. Partial compression is where the spring element (2.3) is not fully compressed and only so that the locking head (2.4) moves away from the lower surface (1.6) of the gripper finger (1) by a distance (h) that is equal to or greater than the thickness (h1) of the front part (3.2.4.1) of the partition (3.2.4) of the cavity (3.2.1) of the jaw (3). The lower surface of the partition (3.2.4) is a guide surface (3.2.3.3), with the help of which the locking head (2.4) of the locking pin (2) is lowered down, further, without additional external pressure on the head (2.1) of the locking pin (2) by deforming, compressing, the spring element (2.3) during fitting of the jaw (3) onto the gripper finger (1). The jaw (3) is mounted on the gripper finger (1), while the gripper finger (1) moves through the recess (3.2.2) located above the partition (3.2.4) of the jaw cavity (3.2.1), the elongated part (2.2)) of the locking pin (2), between the locking head (2.4) and the lower surface (1.6) of the gripper finger (1) moves through the first recess (3.2.5) of the jaw cavity (3.2.1) partition (3.2.4) towards the second cavity (3.2.7) and the locking head (2.4) moves through the recess (3.2.3) located below the partition (3.2.4), intended for its movement in the jaw.

After the free end (1.4) of the gripper finger (1) rests against the back wall (3.2.2.4) of the cavity (3.2.1) of the part (3.2) intended for fixing the gripper finger, the locking head (2.4) of the locking pin (2) is lifted up and placed in locking position, in which the surface of the beveled edge of the perimeter flank of the locking head (2.4) rests against the surface of the beveled edge (3.2.6) of the second cavity (3.2.7) of the partition (3.2.4).

To replace the jaw (3), the head of the locking pin (2.1) is pressed down until the locking head of the locking pin (2.4) rests against the support surface (3.2.3.1) of the rear position of the locking head (2.4), which is the bottom (3.2.3.1) of the recess (3.2.3) intended to place and guide the end of the pin (2) with the locking head (2.4). In this position, the jaw (3) can be detached from the gripper finger (1).

Although the present description includes numerous characteristics and advantages of the invention together with structural details and features, the description is given as an example of the invention embodiment. The scope of protection is defined by the appended claims.

## Claims

1. The gripper quick-change jaw system, comprising
a gripper finger, a locking pin and a jaw, wherein one end of the gripper finger is adapted to be anchored to the gripper and the other end is free and adapted to interact with the jaw, the gripper finger includes at least one hole which is provided for the locking pin and in which the locking pin can move along said hole,
wherein the locking pin comprises an elongated part, a head for transmitting pressing force to the locking pin, a spring element that is positioned around the elongated part of the locking pin, a locking head,
wherein the jaw comprises a part for gripping a preform or an article and a part for attachment to the gripper finger
wherein the part (3.2) intended to be attached to the gripper finger (1) comprises a cavity (3.2.1), which comprises:
a recess (3.2.2) for the movement of the gripper finger (1) through the jaw (3);
a recess (3.2.3) intended to place and guide the locking head (2.4);
a partition (3.2.4) between the recess (3.2.3) for placing and guiding the locking head (2.4) and the recess (3.2.2) for the movement of the gripper finger (1) through the jaw (3), where the partition (3.2.4) of the jaw's (3) cavity (3.2.1) comprises a first cavity (3.2.5) for movement of the elongated part (2.2) of the locking pin (2) extending between the gripper finger (1) and the locking head (2.4) to the locking position, and a second cavity (3.2.7) for inserting the locking head (2.4) in the position of locking the jaw (3) with the gripper finger (1) by means of the locking pin (2), wherein, after insertion, the edges of the peripheral flanks of the locking head (2.4) rest against edge (3.2.6) of the second cavity (3.2.7) of the partition (3.2. 4).

2. The gripper (TG) quick-change jaw system according to claim 1, wherein said jaw partition (3.2.4) comprises a front part (3.2.4.1) and a guide part (3.2.3.3) for the locking head (2.4), wherein the thickness (h1) of the front part is not greater than the distance (h) between the locking head (2.4) and the lower surface (1.6) of the gripper finger (1), and the guide part (3.2.3.3) extends from the beginning of the first cavity (3.2.5) of the partition (3.2.4) of jaw's (3) cavity (3.2.1) to the beginning of the second cavity (3.2.7) of said partition (3.2.4).

3. The gripper (TG) quick-change jaw system according to any one of the preceding claims, wherein the recess (3.2.2) for movement of the gripper finger (1) through the jaw (3) comprises lateral guide inner surfaces (3.2.2.2', 3.2.2.2"), upper guide inner surfaces (3.2.2.1',3.2.2.1"), lower guide inner surfaces (3.2.2.3',3.2.2.3") and a back wall (3.2.2.4).

## Patentansprüche

1. Greiferschnellwechselbackensystem, umfassend einen Greiferfinger, einen Verriegelungsstift und eine Backe, wobei ein Ende des Greiferfingers dazu ausgelegt ist, an dem Greifer verankert zu werden, und das andere Ende frei und dazu ausgelegt ist, mit der Backe zu interagieren, wobei der Greiferfinger mindestens ein Loch beinhaltet, das für den Verriegelungsstift vorgesehen ist und in dem sich der Verriegelungsstift entlang des Lochs bewegen kann,
wobei der Verriegelungsstift einen länglichen Teil, einen Kopf zum Übertragen von Druckkraft auf den Verriegelungsstift, ein Federelement, das um den länglichen Teil des Verriegelungsstifts positioniert ist, einen Verriegelungskopf umfasst,
wobei die Backe einen Teil zum Greifen einer Vorform oder eines Gegenstands und einen Teil zum Anbringen an den Greiferfinger umfasst,
wobei der Teil (3.2), der dazu gedacht ist, an dem Greiferfinger (1) angebracht zu werden, einen Hohlraum (3.2.1) umfasst, der Folgendes umfasst:
eine Aussparung (3.2.2) zur Bewegung des Greiferfingers (1) durch die Backe (3);
eine Aussparung (3.2.3), die dazu gedacht ist, den Verriegelungskopf (2.4) zu platzieren und zu führen;
eine Trennwand (3.2.4) zwischen der Aussparung (3.2.3) zum Platzieren und Führen des Verriegelungskopfs (2.4) und der Aussparung (3.2.2) zur Bewegung des Greiferfingers (1) durch die Backe (3), wobei die Trennwand (3.2.4) des Hohlraums (3.2.1) der Backe (3) einen ersten Hohlraum (3.2.5) zur Bewegung des länglichen Teils (2.2) des Verriegelungsstifts (2), der sich zwischen dem Greiferfinger (1) und dem Verriegelungskopf (2.4) erstreckt, in die Verriegelungsposition und einen zweiten Hohlraum (3.2.7) zum Einführen des Verriegelungskopfs (2.4) in die Position zum Verriegeln der Backe (3) mit dem Greiferfinger (1) mittels des Verriegelungsstifts (2) umfasst, wobei nach dem Einführen die Kanten der peripheren Flanken des Verriegelungskopfs (2.4) an der Kante (3.2.6) des zweiten Hohlraums (3.2.7) der Trennwand (3.2.4) anliegen.

2. Greifer(TG)-Schnellwechselbackensystem nach Anspruch 1, wobei die Backentrennwand (3.2.4) einen vorderen Teil (3.2.4.1) und einen Führungsteil (3.2.3.3) für den Verriegelungskopf (2.4) umfasst, wobei die Dicke (h1) des vorderen Teils nicht größer ist als der Abstand (h) zwischen dem Verriegelungskopf (2.4) und der unteren Fläche (1.6) des Greiferfingers (1) und sich der Führungsteil (3.2.3.3) von dem Anfang des ersten Hohlraums (3.2.5) der Trennwand (3.2.4) des Hohlraums (3.2.1) der Backe (3) zu dem Anfang des zweiten Hohlraums (3.2.7) der Trennwand (3.2.4) erstreckt.

3. Greifer(TG)-Schnellwechselbackensystem nach einem der vorhergehenden Ansprüche, wobei die Aussparung (3.2.2) zur Bewegung des Greiferfingers (1) durch die Backe (3) seitliche Führungsinnenflächen (3.2.2.2', 3.2.2.2"), obere Führungsinnenflächen (3.2.2.1', 3.2.2.1"), untere Führungsinnenflächen (3.2.2.3', 3.2.2.3") und eine Rückwand (3.2.2.4) umfasst.

## Revendications

1. Système de mâchoires à changement rapide de préhenseur, comprenant un doigt de préhenseur, une goupille de verrouillage et une mâchoire, dans lequel une extrémité du doigt de préhenseur est conçue pour être ancrée au préhenseur et l'autre extrémité est libre et conçue pour interagir avec la mâchoire, le doigt de préhenseur comprend au moins un trou qui est prévu pour la goupille de verrouillage et dans lequel la goupille de verrouillage peut se déplacer le long dudit trou,
dans lequel la goupille de verrouillage comprend une partie allongée, une tête pour transmettre la force de pression à la goupille de verrouillage, un élément ressort qui est positionné autour de la partie allongée de la goupille de verrouillage, une tête de verrouillage,
dans lequel la mâchoire comprend une partie pour saisir une préforme ou un article et une partie pour la fixation au doigt de préhenseur, dans lequel la partie (3.2) destinée à être fixée au doigt de préhenseur (1) comprend une cavité (3.2.1), qui comprend :
un évidement (3.2.2) pour le mouvement du doigt de préhenseur (1) à travers la mâchoire (3) ;
un évidement (3.2.3) destiné à placer et guider la tête de verrouillage (2.4) ;
une cloison (3.2.4) entre l'évidement (3.2.3) pour placer et guider la tête de verrouillage (2.4) et l'évidement (3.2.2) pour le mouvement du doigt de préhenseur (1) à travers la mâchoire (3), où la cloison (3.2.4) de la cavité (3.2.1) de la mâchoire (3) comprend une première cavité (3.2.5) pour le mouvement de la partie allongée (2.2) de la goupille de verrouillage (2) s'étendant entre le doigt de préhenseur (1) et la tête de verrouillage (2.4) vers la position de verrouillage, et une seconde cavité (3.2.7) pour insérer la tête de verrouillage (2.4) dans la position de verrouillage de la mâchoire (3) avec le doigt de préhenseur (1) au moyen de la goupille de verrouillage (2), dans lequel, après l'insertion, les bords des flancs périphériques de la tête de verrouillage (2.4) reposent contre le bord (3.2.6) de la seconde cavité (3.2.7) de la cloison (3.2.4).

2. Système de mâchoires à changement rapide de préhenseur (TG) selon la revendication 1, dans lequel ladite cloison de mâchoire (3.2.4) comprend une partie avant (3.2.4.1) et une partie de guidage (3.2.3.3) pour la tête de verrouillage (2.4), dans lequel l'épaisseur (h1) de la partie avant n'est pas supérieure à la distance (h) entre la tête de verrouillage (2.4) et la surface inférieure (1.6) du doigt de préhenseur (1), et la partie de guidage (3.2.3.3) s'étend à partir du début de la première cavité (3.2.5) de la cloison (3.2.4) de la cavité (3.2.1) de la mâchoire (3) jusqu'au début de la seconde cavité (3.2.7) de ladite cloison (3.2.4).

3. Système de mâchoires à changement rapide de préhenseur (TG) selon l'une quelconque des revendications précédentes, dans lequel l'évidement (3.2.2) pour le mouvement du doigt de préhenseur (1) à travers la mâchoire (3) comprend des surfaces intérieures de guidage latérales (3.2.2.2', 3.2.2.2"), des surfaces intérieures de guidage supérieures (3.2.2.1', 3.2.2.1"), des surfaces intérieures de guidage inférieures (3.2.2.3', 3.2.2.3") et une paroi arrière (3.2.2.4).
